# EUROPÄISCHE PATENTANMELDUNG

(11) **EP 1 918 619 A1**
(43) Veröffentlichungstag der Anmeldung: **07.05.2008**
(21) Anmeldenummer: 06022772.5
(22) Anmeldetag: 02.11.2006
(51) Int. Cl.: F16K 11/074, E03C 1/04

(54) **Sanitärarmatur**

(71) Anmelder: KWC AG, 5726 Unterkulm (CH)
(72) Erfinder: Gloor, Herbert, 5726 Unterkulm (CH); Alder, Hans-Ulrich, 5054 Moosleerau (CH)
(74) Vertreter: Schaad, Balass, Menzl & Partner AG

(57) **Zusammenfassung**

Sanitärarmatur (10, 10A) mit einem Auslass (38) und einem hydraulisch damit verbundenen, an eine erste Flüssigkeitsquelle anschliessbaren ersten Speiseleitungsanschluss (74), einer hydraulisch zwischen dem ersten Speiseleitungsanschluss (74) und dem Auslass (38) angeordneten Pilotventilanordnung (48), und einem an eine zweite Flüssigkeitsquelle anschliessbaren zweiten Speiseleitungsanschluss (76). Die Sanitärarmatur (10, 10A) weist weiter eine Steuervorrichtung (50) auf, welche eingangsseitig mit dem ersten und dem zweiten Speiseleitungsanschluss (74, 76) und ausgangsseitig derart mit der Pilotventilanordnung (48) verbunden ist, dass die Pilotventilanordnung (48) über die Steuervorrichtung (50) dauernd mit wenigstens dem ersten Speiseleitungsanschluss (74) oder dem zweiten Speiseleitungsanschluss (76) hydraulisch verbunden ist.

## Beschreibung

Die vorliegende Erfindung bezieht sich auf eine Sanitärarmatur gemäss dem Oberbegriff des Anspruchs 1 und eine Verwendung einer solchen Sanitärarmatur gemäss Anspruch 10.

Eine in EP-A-1234917 offenbarte Sanitärarmatur weist zwei voneinander getrennte Auslassstutzen für die Ausgabe von zwei verschiedenen Wasserqualitäten auf. Ein erster Auslassstutzen ist dabei hydraulisch über ein erstes Kanalsystem mit einer ersten Flüssigkeitsquelle verbunden. Die Ausgabe der ersten Flüssigkeit ist über ein Betätigungselement gesteuert, welches mit einer im Inneren eines Armaturengehäuses angeordneten Pilotventilanordnung verbunden ist. Aufgrund dieser Pilotventilanordnung muss bei der Benutzung dieser Sanitärarmatur nicht dem gesamten Flüssigkeitsdruck der ersten Flüssigkeit entgegengewirkt werden, sondern lediglich einem Bruchteil davon. Ein zweiter Auslassstutzen ist hydraulisch über ein zweites Kanalsystem und einer Steuervorrichtung zum Mischen der von einer Kalt- und einer Warmwasserleitung zugeführten weiteren Flüssigkeiten verbunden.

In EP-A-0616156 ist eine weitere Sanitärarmatur mit einer Steuerpatrone für eine Einhebelmischarmatur offenbart. Die Steuerpatrone weist eine gehäusefeste erste Steuerscheibe und eine mittels eines Betätigungshebels drehbare zweite Steuerscheibe auf, welche beide in einem Patronengehäuse gehalten sind. Die keramischen Steuerscheiben haben jeweils zwei Durchlässe für Kalt- und Warmwasser. Beim Drehen der zweiten Steuerscheibe relativ zur gehäusefesten ersten Steuerscheibe werden zunächst nacheinander der Kaltwasser- und Warmwasser-Durchfluss freigegeben und anschliessend wird der Kaltwasser-Durchfluss gedrosselt. Dadurch ergeben sich bei einer Drehbewegung des Betätigungshebels folgende Zustände: abgesperrt - kalt - gemischt - warm.

Es ist Aufgabe der vorliegenden Erfindung, eine Sanitärarmatur zu schaffen, bei welcher die Ausgabe einer Mischqualität von Flüssigkeiten über einen Auslass mittels einer Pilotventilanordnung möglich ist.

Diese Aufgabe wird durch eine erfindungsgemässe Sanitärarmatur gemäss dem Anspruch 1 gelöst.

Dank einer speziell ausgebildeten Steuervorrichtung ist eine Pilotventilanordnung stets mit mindestens einem Speiseleitungsanschluss hydraulisch verbunden, durch welchen der Sanitärarmatur eine Flüssigkeit zugeführt wird. Das heisst, dass stets ein Flüssigkeitsdruck an der Pilotventilanordnung anliegt. Die Pilotventilanordnung ermöglicht es einem Benutzer, die erfindungsgemässe Sanitärarmatur mit wenig Kraftaufwand zu betätigen. Durch das leicht betätigbare, mit der Pilotventilanordnung verbundene Betätigungselement eignet sich die erfindungsgemässe Sanitärarmatur beispielsweise besonders auch für eine Benutzung durch behinderte oder ältere Leute.

Durch die funktionelle Trennung "Ausgabe absperren" und "Mischverhältnis des Flüssigkeitsgemisches einstellen", welche sich in den zwei voneinander getrennten Funktionselementen "Pilotventilanordnung" und "Steuervorrichtung" widerspiegelt, sowie dadurch, dass stets ein Druck an der Pilotventilanordnung anliegt, kann eine Verzögerungszeit zwischen einem Einstellen eines geänderten Mischverhältnisses und der Ausgabe eines Flüssigkeitsgemisches gemäss dem soeben geänderten Mischverhältnis verringert werden.

Weitere, besonders bevorzugte Ausführungsformen sind mit den in den abhängigen Ansprüchen angegebenen Merkmalen ausgestattet.

Eine bevorzugte Ausführungsform wird nachfolgend anhand einer Zeichnung näher erläutert. Es zeigen rein schematisch:
- Fig. 1: einen Längsschnitt durch eine erste Ausführungsform der erfindungsgemässen Sanitärarmatur;
- Fig. 2: einen Längsschnitt entlang der Linie II-II durch die in Fig. 1 gezeigte Sanitärarmatur;
- Fig. 3: eine perspektivische Ansicht eines Verbindungsteils der in Fig. 1 gezeigten Sanitärarmatur;
- Fig. 4: eine vergrösserte und vereinfachte Schnittdarstellung einer in Fig. 2 gezeigten Steuervorrichtung;
- Fig. 5: eine vereinfachte und um 90° gedrehte Schnittdarstellung entlang der Linie V-V der Fig. 4, welche eine erste Steuerscheibe und eine sich in einer ersten Endlage befindende zweite Steuerscheibe der in Fig. 4 gezeigten Steuervorrichtung zeigt;
- Fig. 6: die Schnittdarstellung in gleicher Darstellung wie in Fig. 5, wobei sich die zweite Steuerscheibe in einer zweiten Endlage befindet;
- Fig. 7: die Schnittdarstellung in gleicher Darstellung wie in Fig. 5, wobei sich die zweite Steuerscheibe zwischen der ersten und der zweiten Endlage befindet;
- Fig. 8: eine perspektivische Ansicht eines Mitnehmers der in Fig. 4 gezeigten Steuervorrichtung;
- Fig. 9: eine perspektivische Darstellung eines Gehäuseoberteils der in Fig. 4 gezeigten Steuervorrichtung;
- Fig. 10: eine perspektivische Ansicht eines Einstellelementes der in Fig. 4 gezeigten Steuervorrichtung;
- Fig. 11: eine perspektivische Ansicht eines Zwischenelementes der in Fig. 4 gezeigten Steuervorrichtung;
- Fig. 12: eine perspektivische Ansicht eines Anschlussteils der in Fig. 4 gezeigten Steuervorrichtung; und
- Fig. 13: einen Längsschnitt einer zweiten Ausführungsform der erfindungsgemässen Sanitärarmatur;

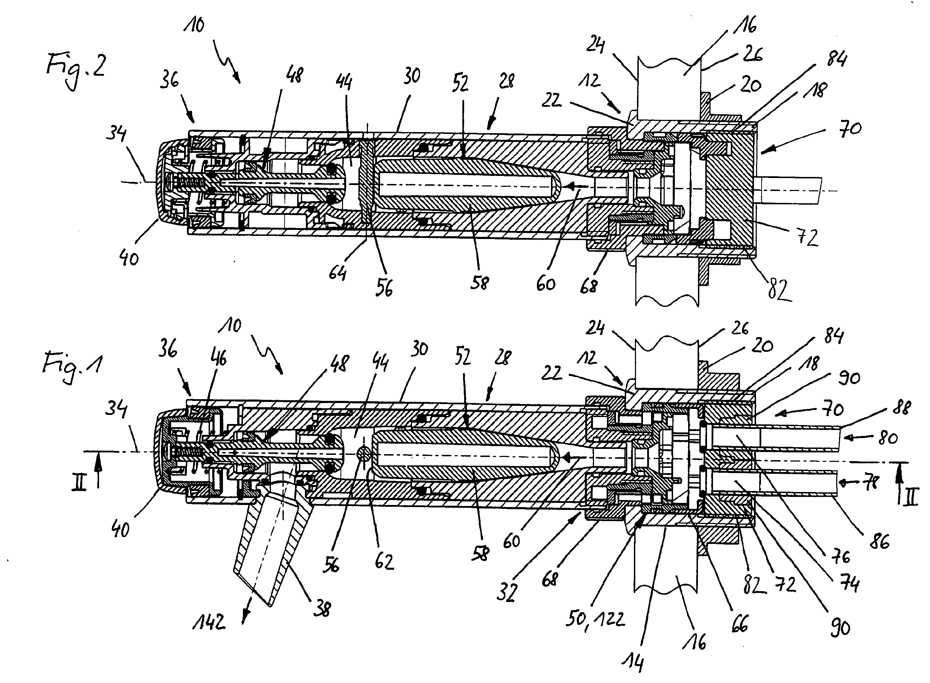

Die in Fig. 1 in montiertem Zustand dargestellte, erste Ausführungsform der erfindungsgemässen Sanitärarmatur 10 durchgreift in einem Befestigungsbereich 12 eine Durchführung 14 einer Wand 16. Die Bezeichnung Wand 16 kann alternativ beispielsweise eine Einbaukombination sein. Die Sanitärarmatur 10 ist mittels einer Sockelhülse 18 und einer Überwurfmutter 20 drehfest an der Wand 16 befestigbar. Die kreisringzylinderförmige Sockelhülse 18 weist dazu stirnseitig eine flanschartige Hülsenschulter 22 zum Anliegen an einer Oberseite 24 der Wand 16 auf, während die Überwurfmutter 20 zum Anliegen an einer benutzerseitigen Unterseite 26 der Wand 16 bestimmt ist.

Ein von Aussen sichtbares Gehäuse 28 der Sanitärarmatur 10 weist neben der Sockelhülse 18 ein im Wesentlichen kreiszylinderförmiges Armaturgehäuse 30 auf, welches in einem der Hülsenschulter 22 zugewandten Befestigungsabschnitt 32 drehfest mit der Sockelhülse 18 verbunden ist. Durch die Zylinderform des Armaturgehäuses 30 wird eine Achse 34 definiert.

In einem, dem Befestigungsabschnitt 32 gegenüberliegenden, freien Endabschnitt 36 des Armaturengehäuses 30 sind ein Auslass 38 zur Ausgabe eines Flüssigkeitsgemisches und ein Betätigungselement 40 zum Unterbrechen der Ausgabe des Flüssigkeitsgemisches angeordnet.

Der Auslass 38 ist rohrartig ausgebildet und quer zur Achse 34 angeordnet. Er ist hydraulisch mit einem im Armaturengehäuse 30 untergebrachten Kanalsystem 44 verbunden.

Das Betätigungselement 40 ist als ein Druckknopf 40 gestaltet, welcher stirnseitig am Armaturengehäuse 30 angeordnet ist und kann eine Hubbewegung in Achsrichtung ausführen. In einem Ruhezustand (bei Nichtbenutzung der Sanitärarmatur 10) drückt eine mit dem Armaturengehäuse 30 verbundene Druckfeder 46 das Betätigungselement 40 vom Armaturengehäuse 30 weg. Die Federkraft führt dazu, dass im Ruhezustand eine mit dem Betätigungselement 40 verbundene, im Kanalsystem 44 des Armaturengehäuses 30 angeordnete, koaxial zur Achse 34 verlaufende Pilotventilanordung 48 eine Fluidausgabe über den Auslass 38 selbsttätig unterbricht. Bezüglich des Aufbaus und der Funktion der als Hubventilanordnung ausgebildeten Pilotventilanordung 48 wird auf die EP-A-1234917 verwiesen.

Wie aus Fig. 1 hervorgeht, ist die Pilotventilanordnung 48 zwischen dem Auslass 38 und einer im Befestigungsbereich 12 platzierten Steuervorrichtung 50 im hydraulisch abgedichteten Kanalsystem 44 angeordnet.

Zwischen der Steuervorrichtung 50 und der Pilotventilanordnung 48 ist im Kanalsystem 44 überdies eine hydraulisch wirkende Kompensatoranordnung 52 angeordnet. Sie dient zur veränderbaren Festeinstellung eines Strömungsquerschnitts. Bezüglich des Aufbaus und der Funktion dieser Kompensatoranordnung 52 wird ebenfalls auf EP-A-1234917 verwiesen. Die Veränderung des Strömungsquerschnittes erfolgt über ein Exzenterelement 56, im vorliegenden Fall einer Exzenterschraube 56, welche einen lose im Kanalsystem 44 angeordneten Regulierkörper 58 der Kompensatoranordnung 52 daran hindert, sich im Betrieb in einer Strömungsrichtung 60, d.h. von der Steuervorrichtung 50 in Richtung der Pilotventilanordnung 48, im Kanalsystem 44 zu verschieben. Dazu ist die Exzenterschraube 56 am Armaturengehäuse 30 abgestützt und wirkt auf eine Stirnseite 62 des Regulierkörpers 58 ein. Aus Fig. 1 und Fig. 2 wird ersichtlich, dass durch Drehen der Exzenterschraube 56 um deren Schraubenachse 64 die Längsposition des Regulierkörpers 58 entlang der Achse 34 einstellbar ist.

Die im Wesentlichen kreiszylinderförmige, auch als Steuerpatrone oder Mischpatrone bezeichnete Steuervorrichtung 50 erstreckt sich koaxial zur Achse 34, überwiegend in einem Durchlass 66 der Sockelhülse 18. Die Steuervorrichtung 50 ist über ein in sie hineingreifendes Einstellelement 68 betätigbar, welches im Wesentlichen zwischen der Sockelhülse 18 und dem Armaturengehäuse 30 angeordnet und von ausserhalb der Sanitärarmatur zugänglich ist.

Die Steuervorrichtung liegt stirnseitig mit ihrer in Strömungsrichtung 60 betrachteten Eingangsseite 70 anliegend an einem pillenförmigen Verbindungsteil 72 an. Das pillenförmige Verbindungsteil 72 weist einen ersten Speiseleitungsanschluss 74 und einen zweiten Speiseleitungsanschluss 76 auf. Der erste und zweite Speiseleitungsanschluss 74, 76 sind zur Zufuhr einer ersten Flüssigkeit 78 beziehungsweise einer zweiten Flüssigkeit 80 jeweils mit einer ersten Flüssigkeitsquelle beziehungsweise einer zweiten Flüssigkeitsquelle verbindbar, welche in den Figuren nicht dargestellt sind.

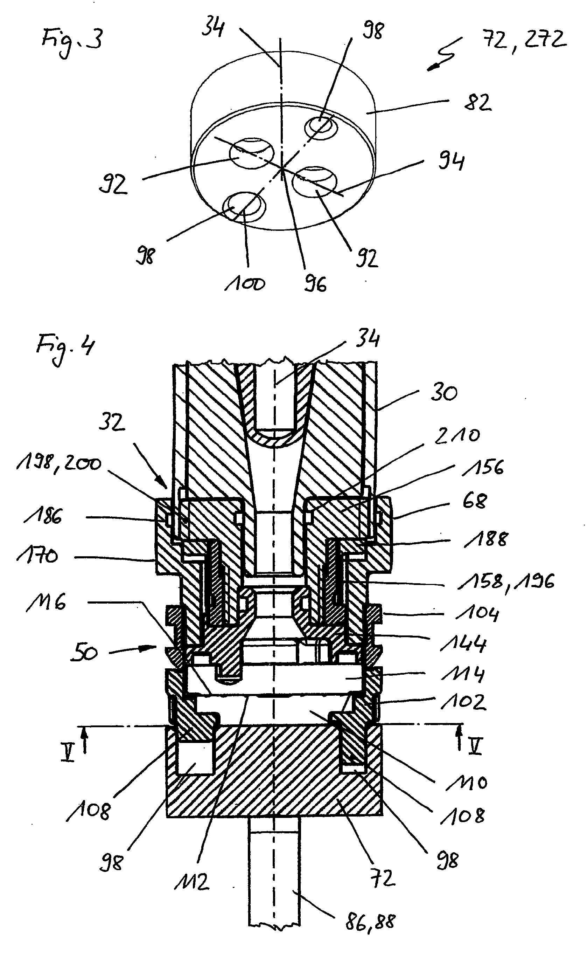

Aus Fig. 1 geht zusammen mit Fig. 3 hervor, dass der kreiszylinderförmige Verbindungsteil 72 mantelseitig über ein Aussengewinde 82 verfügt. Mit diesem Aussengewinde 82 ist der Verbindungsteil 72 in ein entsprechendes Innengewinde 84 der Sockelhülse 18 derart eingeschraubt, dass die zwischen der Sockelhülse 18 und dem Verbindungsteil 72 angeordnete Steuervorrichtung 50 drehfest in der Sockelhülse 18 gehalten ist. Die hydraulische Verbindung der beiden Speiseleitungsanschlüsse 74, 76 mit den jeweiligen Flüssigkeitsquellen erfolgt dabei jeweils über eine erste Zuleitung 86 und eine zweite Zuleitung 88, vorzugsweise über handelsübliche Polyäthylenschläuche, welche jeweils mittels eines Zuleitungsfittings 90 in Form eines "John Guest^{®}"-Halteelements dichtend am Verbindungsteil 72 befestigt sind.

Fig. 3 zeigt, dass das Verbindungsteil 72 stirnseitig mit zwei in Achsrichtung durch das Verbindungsteil 72 hindurch führenden Aufnahmebohrungen 92 zur Aufnahme je eines solchen "John Guest^{®}"-Halteelements 90 versehen sind. Die beiden Aufnahmebohrungen 92 sind entlang einer ersten Querachse 94 ausgerichtet, welche rechtwinklig zur Achse 34 verläuft. Sie liegen in etwa gleichem Abstand von einem durch die Achse 34 und die erste Querachse 94 definierten Achszentrum 96 voneinander entfernt. Die Speiseleitungsanschlüsse 74, 76 sind im Verbindungsteil 72 hydraulisch voneinander getrennt und verlaufen im Wesentlichen parallel zur Achse 34.

Der Verbindungsteil 72 weist zur Bildung einer Verdrehsicherung mit der Steuervorrichtung 50 ausserdem stirnseitig zwei in Achsrichtung nicht durchgehende Ausnehmungen 98 unterschiedlichen Durchmessers auf. Die Ausnehmungen 98 sind entlang einer zweiten Querachse 100 angeordnet, welche ebenfalls rechtwinklig zur Achse 34 verläuft, jedoch um 90° zur ersten Querachse 94 versetzt ist.

Die Steuervorrichtung 50 verfügt über ein zweiteiliges Gehäuse mit einem eingangsseitig angeordneten Gehäuseunterteil 102 und einem damit drehfest verbundenen Gehäuseoberteil 104. Das Gehäuseoberteil 104 ist ausgangsseitig angeordnet. Insbesondere aus Fig. 2 geht hervor, dass der Gehäuseunterteil 102 stirnseitig zwei Vorsprünge 108 zum formschlüssigen Eingreifen in die Ausnehmungen 98 des Verbindungsteils 72 aufweist.

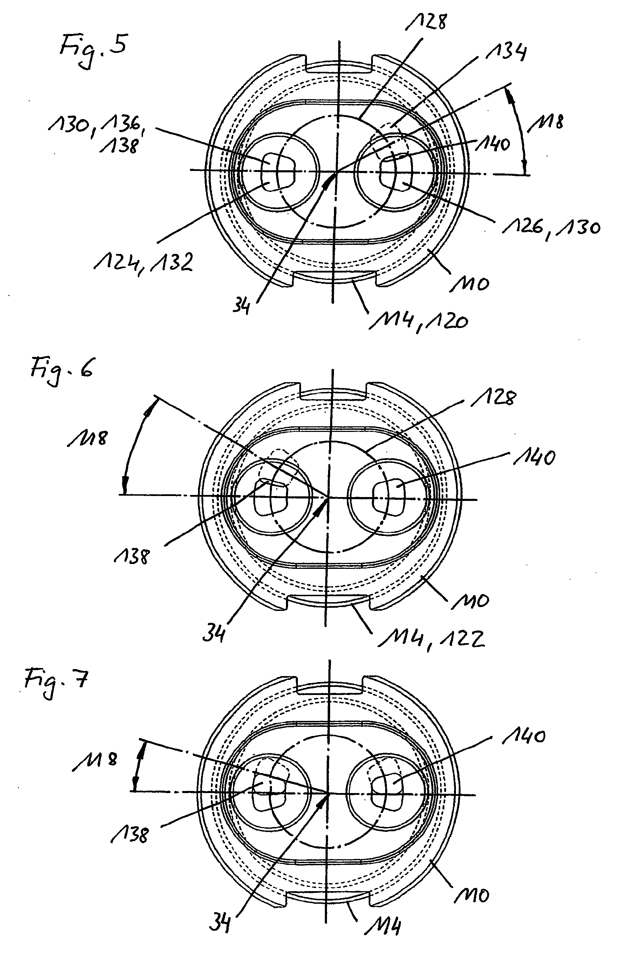

Wie Fig. 4 zeigt, ist hydraulisch eingangsseitig eine erste keramische Steuerscheibe 110 gehäusefest über eine Formpassung in der Gehäuseunterseite 102 der Steuervorrichtung 50 gelagert. Die erste Steuerscheibe 110 weist dabei eine Kontaktfläche 112 auf, welche vom Verbindungsteil 72 abgewandt ist. Direkt an dieser Kontaktfläche 112 der ersten Steuerscheibe 110 liegt ausgangsseitig eine zweite keramische Steuerscheibe 114 ebenfalls an einer dazu ausgebildeten weiteren Kontaktfläche 116 an. Die zweite keramische Steuerscheibe 114 ist innerhalb eines vorbestimmten Drehwinkels 118 zwischen einer ersten Endlage 120 und einer zweiten Endlage 122 drehbar um die Achse 34 in der Steuervorrichtung 50 gelagert (siehe Fig. 5 und 6).

Fig. 5 zeigt eine vereinfachte Schnittansicht entlang der Linie V-V von Fig. 4 mit der ersten und zweiten Steuerscheibe 110, 114, welche bezüglich der Achse 34 konzentrisch angeordnet sind. Die zweite Steuerscheibe 114 befindet sich in der ersten Endlage 120. Die erste Steuerscheibe 110 weist einen ersten Einlass-Durchlass 124 und einen zweiten Einlass-Durchlass 126 auf, welche bezüglich der Achse 34 einander diametral gegenüberliegend auf einer um die Achse 34 verlaufenden Kreislinie 128 angeordnet sind. Sowohl der erste, als auch der zweite Einlass-Durchlass 124, 126 weisen einen im Wesentlichen trapezförmigen Querschnitt 130 mit verrundeten Ecken auf.

Einige Konturen der beweglichen zweiten Steuerscheibe 114 sind in Fig. 5 von der ersten Steuerscheibe 110 verdeckt und daher gestrichelt dargestellt. Die zweite Steuerscheibe 114 weist einen ersten Steuerdurchlass 132 und einen zweiten Steuerdurchlass 134 auf. Diese haben zwei trapezförmige, weitere Querschnitte 136 von im Wesentlichen derselben Grösse und Form, wie die der Einlass-Durchlässe 124, 126. Der erste und der zweite Steuerdurchlass 132, 134 sind ebenfalls auf der Kreislinie 128 angeordnet, wobei der zweite Steuerdurchlass 134 um den Drehwinkel 118 gegenüber dem zweiten Einlass-Durchlass 126 um die Achse 34 versetzt ist. Der Drehwinkel 118 beträgt ungefähr 60°' kann jedoch in einem Bereich zwischen etwa 30° und etwa 270° variieren.

In der ersten Endlage 120 (siehe Fig. 5) liegen der erste Steuerdurchlass 132 und der erste Einlass-Durchlass 124 im Wesentlichen übereinander, so dass ein vom ersten Einlass-Durchlass 124 und vom ersten Steuerdurchlass 132 gebildeter erster Strömungsquerschnitt 138 maximal ist. Gleichzeitig überschneiden sich der zweite Einlass-Durchlass 126 und der zweite Steuerdurchlass 134 lediglich geringfügig, was dazu führt, dass ein vom zweiten Einlass-Durchlass 126 und vom zweiten Steuerdurchlass 134 gebildeter zweiter Strömungsquerschnitt 140 minimal ist.

Beim in Fig. 6 gezeigten Zustand befindet sich die zweite Steuerscheibe 114 relativ zur ersten Steuerscheibe 110 in der zweiten Endlage 122. In dieser zweiten Endlage 122 steht der zweite Steuerdurchlass 134 im Wesentlichen deckungsgleich über dem zweiten Einlass-Durchlass 126, so dass der zweite Strömungsquerschnitt 140 maximal ist. In diesem Zustand ist der erste Strömungsquerschnitt 138 minimal.

Fig. 7 zeigt die zweite Steuerscheibe 114 in einer Zwischenstellung zwischen ihrer ersten Endlage 120 und ihrer zweiten Endlage 122. In dieser Stellung sind beide Strömungsquerschnitte 138, 140 ungefähr gleich gross. Dadurch erhält der Benutzer der erfindungsgemässen Sanitärarmatur 10 vom Auslass 38 ein Flüssigkeitsgemisch 142 mit in etwa gleichen Volumenanteilen der ersten Flüssigkeit 78 und der zweiten Flüssigkeit 80, wenn das Betätigungselement 40 betätigt wird. Vorausgesetzt ist dabei, dass der Volumenstrom und der Druck der ersten Flüssigkeit 78 annähernd gleich dem der zweiten Flüssigkeit 80 ist.

Wenn der erste Speiseleitungsanschluss 74 an eine Flüssigkeitsquelle für kohlensäurehaltiges (karbonisiertes) Wasser und der zweite Speiseleitungsanschlusses 76 an eine Flüssigkeitsquelle für stilles Wasser (Wasser ohne Kohlensäure) angeschlossen sind, kann der Benutzer über das Einstellelement 68 die Anteile der beiden Flüssigkeiten 78, 80 des auszugebenden Flüssigkeitsgemisches 142 wählen. Wenn sich die erste Steuerscheibe 110 in der ersten Endlage 120 befindet, erhält er im Wesentlichen kohlensäurehaltiges Wasser und wenn sich die erste Steuerscheibe 110 in der zweiten Endlage 122 befindet, erhält er im Wesentlichen stilles Wasser.

Durch die Tatsache, dass beide Speiseleitungsanschlüsse 74, 76 der gezeigten Ausführungsform in einer bevorzugten Verwendung dauernd durch die Steuervorrichtung 50 hydraulisch mit der Pilotventilanordnung 48 verbunden sind, befindet sich im Kanalsystem 44 zwischen der Steuervorrichtung 50 und der Pilotventilanordnung 48 bei jeder Relativstellung der ersten zur zweiten Steuerscheibe 110, 114 immer ein Flüssigkeitsgemisch 142. Bei dieser bevorzugten Verwendung wird dem ersten Speiseleitungsanschluss 74 von der ersten Flüssigkeitsquelle karbonisiertes Wasser mit einem grossen Kohlensäureanteil zugeführt, während dem zweiten Speiseleitungsanschluss 76 von der zweiten Flüssigkeitsquelle stilles Wasser mit keinem oder einem kleinen Kohlensäureanteil zugeführt. In der bevorzugten Ausführungsform der Sanitärarmatur führt dies dazu, dass sich selbst in der zweiten Endlage 122 ein Mindestanteil von karbonisiertem Wasser im Kanalsystem 44 zwischen der Steuervorrichtung 50 und der Pilotventilanordnung 48 befindet, so dass der Benutzer selbst dann im Wesentlichen kohlesäurehaltiges Wasser erhält, wenn er vor dem Betätigen des Betätigungselementes 40 die zweite Steuerscheibe 114 von der zweiten Endlage 122 in die erste Endlage 120 dreht. Dasselbe gilt sinngemäss für den Fall, wo der Benutzer stilles Wasser wählt.

Das Bestimmen der relativen Stellung der zweiten Steuerscheibe 114 gegenüber der ersten Steuerscheibe 110 zwischen der ersten Endlage 120 und der zweiten Endlage 122 erfolgt über das bereits erwähnte Einstellelement 68. Dieses ist in axialer Richtung zwischen der Hülsenschulter 22 der Sockelhülse 18 und dem Armaturengehäuse 30 positioniert.

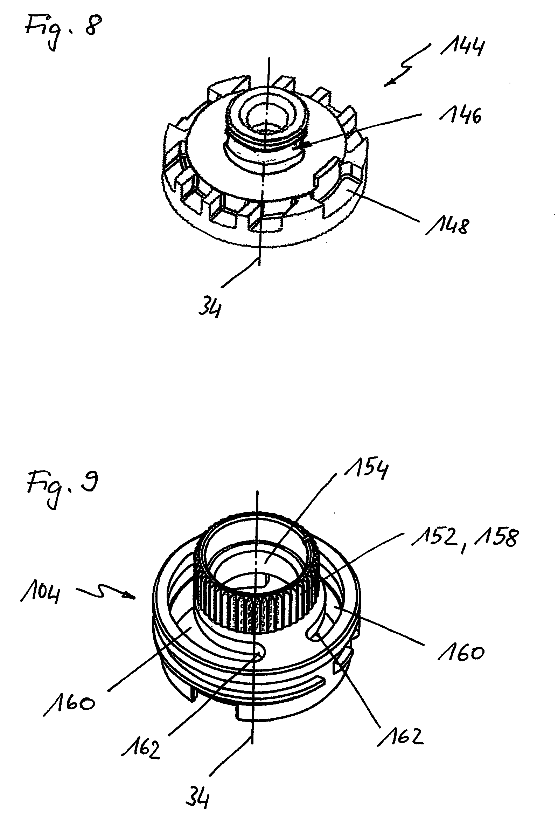

Wie in Fig. 8 gezeigt, greift das Einstellelement 68 in einen Mitnehmer 144 der Steuervorrichtung 50 ein, welcher in Strömungsrichtung 60 ausgangsseitig an der zweiten Steuerscheibe 114 anliegt. Der glockenartige Mitnehmer 144 ist über eine Formpassung drehfest mit der zweiten Steuerscheibe 114 verbunden und weist auf einer, der zweiten Steuerscheibe 114 abgewandten Seite einen konzentrisch zur Achse 34 verlaufenden Mitnehmerhals 146 auf. Der Mitnehmer 144 weist umfangsseitig zwei einander diametral gegenüberliegende Aussparungen 148 auf, in welche im eingebauten Zustand zwei Mitnehmerzapfen 150 (siehe Fig. 10) des Einstellelementes 68 im Wesentlichen formschlüssig eingreifen. Dadurch ist die Drehstellung der zweiten Steuerscheibe 114 bezüglich der ersten Steuerscheibe 110 festgelegt (siehe Fig. 2 und 4).

Die beiden Steuerscheiben 110, 114 und der Mitnehmer 144 sind durch das Gehäuseoberteil 104 und das Gehäuseunterteil 102 innerhalb der Steuervorrichtung 50 axial und radial abgestützt.

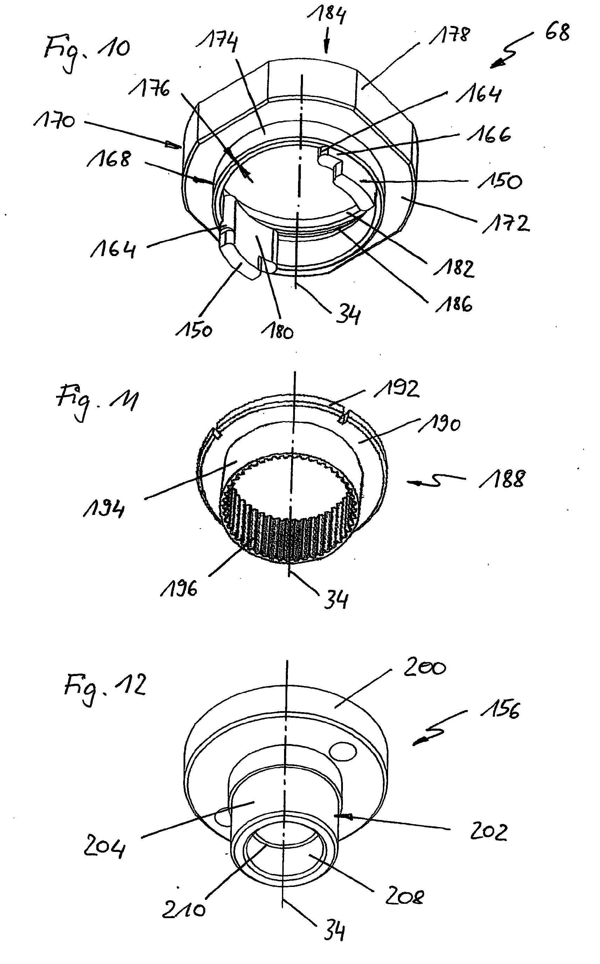

In Fig. 9 ist ein kreiszylinderförmiger Gehäusekragen 152 des Gehäuseoberteils 104 gezeigt, welcher ein darin angeordnetes Innengewinde 154 aufweist. Dieses dient dazu, ein im montierten Zustand in ihn eingeschraubtes Anschlussteil 156 drehfest mit der Sockelhülse 18 zu verbinden.

Fig. 9 illustriert weiter, dass der Gehäusekragen 152 des Gehäuseoberteils 104 eine umlaufende, in Achsrichtung ausgerichtete Aussenverzahnung 158 aufweist, und dass das Gehäuseoberteil 104 radial ausserhalb des Gehäusekragens 152 zwei einander diametral gegenüberliegende, radial um die Achse 34 verlaufende, nierenförmige Öffnungen 160 aufweist, welche in Umfangsrichtung beidseitig an jeweils einem Öffnungsende 162 begrenzt sind.

Diese Öffnungsenden 162 wirken in Umfangsrichtung mit entsprechend geformten umfangsseitigen Stirnseiten 164 zweier jeweils in einer Öffnung 160 laufenden, entsprechend den bogenförmigen Öffnungen 160 kreisringsegmentförmigen geformten Anschlagelemente 166 des Einstellelementes 68 zusammen (siehe Fig. 10). Die Öffnungsenden 162 begrenzen den Drehwinkel 118.

Bezüglich des detaillierten Aufbaus der Steuervorrichtung 50, des Zusammenwirkens seiner Teile und der hydraulischen Dichtproblematik wird auf EP-B-0616156 verwiesen.

Wie insbesondere aus Fig. 10 und Fig. 4 hervorgeht, weist das Einstellelement 68 einen im wesentlichen kreisringförmigen Querschnitt auf, welcher in axialer Richtung radial nach Innen abgesetzt ist, so dass ein radial kleinerer Abschnitt 168 als Führungsdurchmesser und ein radial grösserer als Bedienabschnitt 170 gebildet werden. In zusammengebautem Zustand ist der radial kleinere Abschnitt 168 gegen die Steuervorrichtung 50 gerichtet und das Einstellelement 68 koaxial bezüglich der Achse 34 angeordnet. Beim umfangsseitigen Übergang zwischen dem kleineren Abschnitt 168 und dem Bedienabschnitt 170 ist eine im Wesentlichen senkrecht zur Achse 34 verlaufende Kontaktschulter 172 zum Zusammenwirken mit der Hülsenschulter 22 der Sockelhülse 18 angeordnet. Zur radial umfangsseitigen Führung des Einstellelementes 68 im Durchlass 66 der Hülsenschulter 22, weist das Einstellelement 68 einen an der Kontaktschulter 172 anschliessenden kreiszylinderförmigen Führungsabschnitt 174 des radial kleineren Abschnitts 168 auf. Eine Wandstärke 176 dieses Führungsabschnittes ist ungefähr gleich stark, wie diejenige des Anschlagelementes 166 oder des Mitnehmerzapfens 150. Aus diesem Grund sind alle drei Elemente radial fluchtend.

Zur Erleichterung der Bedienung durch eine verbesserte Griffigkeit ist der frei zugängliche Bedienabschnitt 170 mantelseitig mit vier in Umfangsrichtung gleichmässig verteilten, radial zur Achse 34 gerichteten, ebenen Flächen 178 ausgestattet.

Wie aus Fig. 10 zusammen mit Fig. 4 hervorgeht, weist das Einstellelement 68 radial innenseitig eine erste Innenführung 180 und im Bedienabschnitt 170 eine radial dazu versetzte zweite Innenführung 182 auf. Letztere ist radial grösser ausgeführt als die erste Innenführung 180. Die zweite Innenführung 182 erstreckt sich in Achsrichtung von einer in Strömungsrichtung 60 ausgangsseitigen freien Stirnseite 184 des Einstellelementes 68 her in etwa bis zur Hälfe des Bedienabschnittes 170. Sie weist überdies eine in Umfangsrichtung verlaufende, in axialer Richtung etwa längsmittig angeordnete erste Ringnut 186 auf.

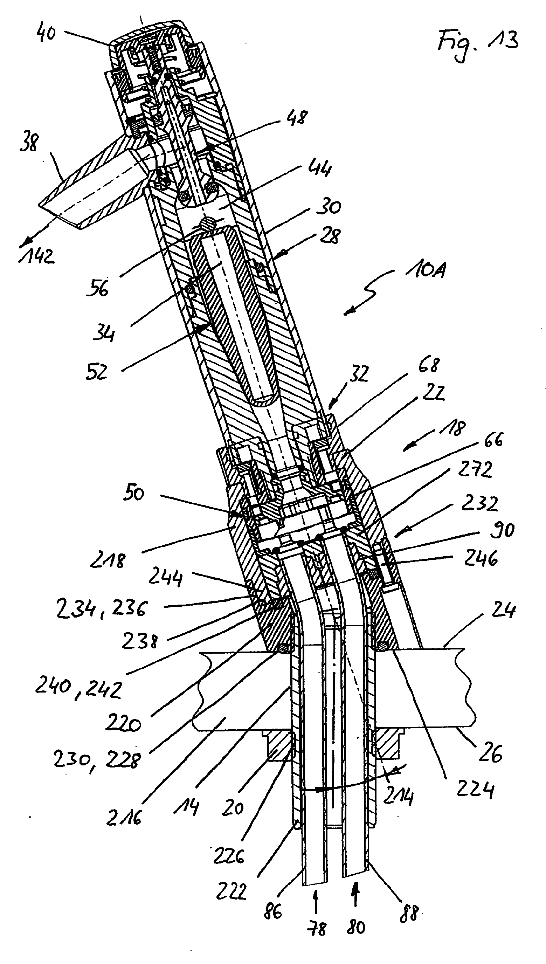

Ein besonders gut in Fig. 11 sichtbares Zwischenelement 188 weist einen kreisringzylinderförmigen Flansch 190 mit einer umfangsseitigen ersten Aussenführung 192, sowie einen am Flansch 190 anschliessenden kreisringförmigen Zylinderabschnitt 194 mit einer in Achsrichtung verlaufenden Innenverzahnung 196 auf. Diese Innenverzahnung 196 wirkt mit der Aussenverzahnung 158 des Gehäuseoberteils 104 zusammen, um das Zwischenelement 188 drehfest am Gehäuseoberteil 104 zu halten.

Wie insbesondere Fig. 4 zusammen mit Fig. 12 zu entnehmen ist, weist das Armaturengehäuse 30 im Befestigungsabschnitt 32 ein Innengewinde 198 auf, welches bei der Montage ein entsprechendes Anschlussgewinde 200 des Abschlussteils 156 aufnimmt, um beide drehfest miteinander zu verbinden. Insbesondere aus Fig. 12 ist ersichtlich, dass der im Wesentlichen kreiszylinderförmige Anschlussteil 156 einen in axialer Richtung auf das Anschlussgewinde 200 folgenden, jedoch radial kleinerer Kragenabschnitt 202 aufweist. Dieser Kragenabschnitt 202 ist umfangsseitig ebenfalls mit einem Aussengewinde 204 versehen, welches dazu dient, eine drehfeste Verbindung mit dem Gehäuseoberteil 104 der Steuervorrichtung 50 zu schaffen. Überdies ist im Kragenabschnitt 202 zum Zusammenwirken mit einem (in Fig. 4 nicht gezeigten) Dichtring 206, welcher in einer Ringnut des Mitnehmerhalses 146 vom Mitnehmer 144 angeordnet ist, eine kreiszylinderförmige Dichtfläche 208 radial Innen angeordnet.

Bei der Herstellung einer Vormontageeinheit wird hydraulisch eingangsseitig der erfindungsgemässen Sanitärarmatur 10 der Verbindungsteil 72 mit der daran gegen Verdrehen gesicherten Steuervorrichtung 50 so lange in axialer Richtung von einem der Hülsenschulter 22 abgewandten freien Ende der Sockelhülse 18 in den Durchlass 66 der Sockelhülse 18 hineingeschraubt, bis das Gehäuseoberteil 104 der Steuervorrichtung 50 innenseitig an der Hülsenschulter 22 fest anliegt. Dadurch wird die Steuervorrichtung 50 drehfest mit der Sockelhülse 18 verbunden.

Dann wird das Einstellelement 68 mittels Einführen der Mitnehmerzapfen 150 durch die Öffnungen 160 des Gehäuseoberteils 104 in den entsprechend gestalteten Aussparungen 148 des Mitnehmers 144 positioniert.

Anschliessend wird zur Verminderung eines Radialspiels zwischen dem Einstellelement 68 und der Steuervorrichtung 50 das erstere derart auf den Gehäusekragen 152 des Gehäuseoberteils 104 aufgeschoben, dass dessen Innenverzahnung 196 in die Aussenverzahnung 158 des Gehäuseoberteils 104 eingreift. Der Zylinderabschnitt 194 des Zwischenelements 188 ist nun umfangseitig im Wesentlichen flächig Innen am Führungsabschnitt 174, den Anschlagelementen 166 und den Mitnehmerzapfen 150 des Einstellelementes 68 geführt. Die erste Aussenführung 192 ist umfangsseitig in der ersten Innenführung 180 des Einstellelementes 68 geführt.

Zur Verbesserung der hydraulischen Dichtigkeit weist die kreiszylindrische, radial innenliegende Dichtfläche 208 des Anschlussteils eine umlaufende, als Innennut ausgebildete, zweite Ringnut 210 auf. In diese zweite Ringnut 210 ist eine in Fig. 4 nicht gezeigte O-Ring-Dichtung einsetzbar.

Schliesslich wird der Anschlussteil 156 mit dem daran befestigten Armaturengehäuse 30 in das Innengewinde 154 des Gehäuseoberteils 104 hineingeschraubt, bis der Anschlussteil 30 drehfest mit der Steuervorrichtung 50 verbunden ist.

Bei der Montage der dadurch erhaltenen Vormontageeinheit an der Wand 16 wird diese mit deren Sockelhülse 18 von der Oberseite 24 der Wand 16 in Richtung der Unterseite 26 geschoben, bis die Hülsenschulter 22 an der Oberseite 24 anliegt. Die gewünschte Ausrichtung des Auslasses 38 in Umfangsrichtung zur Achse 34 an der Wand 16 erfolgt anschliessend vor dem Festziehen der Überwurfmutter 20.

Fig. 13 zeigt eine senkrecht oder nach vorn geneigt stehende, zweite Ausführungs-form 10A der erfindungsgemässen Sanitärarmatur in einem montiertem Zustand. Die zweite Ausführungsform 10A unterscheidet sich von der ersten Ausführungsform 10 der erfindungsgemässen Sanitärarmatur lediglich partiell, weshalb nachfolgend lediglich die Unterschiede zur ersten Ausführungsform 10 erläutert werden. Diese Unterschiede liegen hauptsächlich in der Ausrichtung des Auslasses 38 und im Befestigungsbereich 12.

Durch eine Vormontage des zur ersten Ausführungsform 10 der Sanitärarmatur identischen Auslasses 38 wird dieser lediglich in einer anderen Relativposition am Armaturengehäuse 30 gehalten. Der Auslass 38 ist im Vergleich zur ersten Ausführungsform 10 der Sanitärarmatur um 180° in seiner Aufnahmeöffnung gedreht.

Die durch das Armaturengehäuse 30 definierte Achse 34 verläuft zudem nicht mehr im Wesentlichen rechtwinklig, sondern in einem bestimmten Neigungswinkel 214 zu einer Tischplatte 216. Die Tischplatte 216 kann alternativ beispielsweise ein Waschtisch, ein Spültisch oder eine Einbaukombination sein. Das Armaturengehäuse 30 ist unter dem Neigungswinkel 214 schräg zur Tischplatte 216 befestigbar, um die Entnahme des Flüssigkeitsgemisches 142 zu vereinfachen. Der Neigungswinkel 214 liegt dabei in einem Bereich zwischen 0° und 45°, und beträgt bei der in Fig. 13 gezeigten Ausführungsform ungefähr 15°.

Die Sockelhülse 18 der zweiten Ausführungsform 10A der Sanitärarmatur unterscheidet sich gegenüber derjenigen der ersten Ausführungsform 10 der Sanitärarmatur dadurch, dass sie mehrteilig ist und einen Aufnahmeteil 218, einen Winkelteil 220 und einen Befestigungsteil 222 umfasst. Der Winkelteil 220 weist im Wesentlichen die Form eines schräg abgeschnittenen Zylinders auf, dessen Schrägseite 224 in montiertem Zustand an der Oberseite 24 der Tischplatte 216 anliegt. Der Befestigungsteil 222 ist zur Bildung einer drehfesten Verbindung von der Schrägseite 224 her in den Winkelteil 220 eingeschraubt und weist umfangsseitig ein Aussengewinde 226 zum Zusammenwirken mit einer Überwurfmutter 20 entsprechend der ersten Ausführungsform 10 auf.

Um den Winkelteil 220 gegenüber der Oberseite 24 des Tischplattes 216 abzudichten weist die Schrägseite 224 des Winkelteils 220 eine radial um den Befestigungsteil 222 umlaufende, dritte Ringnut 228 zur Aufnahme einer O-Ring-Dichtung 230 auf.

Eine der Schrägseite 224 gegenüberliegend angeordnete Anschlussseite 232 des Winkelteils 220 ist mit einer Stufenbohrung 234 versehen. Eine durch die Stufenbohrung 234 entstandene, in Strömungsrichtung 60 gesehen ausgangsseitige Vertiefung 236 im Winkelteil 220 ist mit einer im Wesentlichen rechtwinklig zur Achse 34 verlaufende Stufenschulter 238 ausgestattet. Die Stufenschulter 238 weist in axialer Richtung eine radial umlaufende, vierte Ringnut 240 zur Aufnahme einer weiteren O-Ring-Dichtung 242 auf.

Anstelle des Aussengewindes für die Überwurfmutter 20 weist der Aufnahmeteil 218 der Sockelhülse 18 der zweiten Ausführungsform 10A eingangsseitig einen zapfenförmigen Vorsprung 244 auf, welcher entsprechend der Vertiefung 236 des Winkelteils 220 dimensioniert ist. Dadurch wird eine radiale Führung des Aufnahmeteils 218 im Winkelteil 220 sichergestellt.

Da der Verbindungsteil 272 bei der Vormontage der zweiten Ausführungsform 10A der erfindungsgemässen Sanitärarmatur kein Aussengewinde 82 aufweist, kann er lediglich in den Durchlass 66 der Sockelhülse 18 bzw. den Aufnahmeteil 218 hineingeschoben werden. Ansonsten ist der Verbindungsteil 272 baugleich zum Verbindungsteil 72.

Bei der Herstellung einer Vormontageeinheit der zweiten Ausführungsform 10A der erfindungsgemässen Sanitärarmatur wird hydraulisch eingangsseitig der erfindungsgemässen Sanitärarmatur 10A der Verbindungsteil 72 mit der daran gegen Verdrehung gesicherten Steuervorrichtung 50 so lange in axialer Richtung zum freien Ende des Aufnahmeteils 218 hineingeschoben, bis das Gehäuseoberteil 104 der Steuervorrichtung 50 innenseitig an der Hülsenschulter 22 lose anliegt, ein Drehen der Steuervorrichtung 50 relativ zum Aufnahmeteil 218 um die Achse 34 jedoch noch erlaubt.

Die Ausrichtung des Auslasses 38 der Vormontageeinheit der zweiten Ausführungsform 10A erfolgt vorzugsweise vor der Montage der Sanitärarmatur 10A an der Tischplatte 216. Dabei wird eine von der Schrägseite 224 des Winkelteils 220 her zugängliche Verbindungsschraube 246, welche den Winkelteil 220 und den Aufnahmeteil 218 der Sockelhülse 18 miteinander verbindet, erst festgezogen, wenn der Auslass 38 bezüglich eines vorbestimmten, nicht gezeigten Punktes auf einer Ebene ausgerichtet ist. Diese Ebene ist durch die Schrägseite 224 des Winkelteils 220 definiert. Durch das Festziehen der Verbindungsschraube 246 werden der Aufnahmeteil 218 und der Winkelteil 220 drehfest miteinander verbunden und die Steuervorrichtung 50 und der Verbindungsteil 72 zwischen der Hülsenschulter 22 des Aufnahmeteils 218 und der Stufenschulter 238 des Winkelteils 220 in axialer Richtung drehfest gehalten.

Aus Gründen der Zugänglichkeit empfiehlt es sich, die erste Zuleitung 86 und die zweite Zuleitung 88 vorgängig zur Befestigung der Sanitärarmatur der zweiten Ausführungsform 10A an der Tischplatte 216 vorzunehmen.

Die laterale Ausrichtung der zweiten Ausführungsform 10A der erfindungsgemässen Sanitärarmatur an der Tischplatte 216 wird mit dem Anziehen der Überwurfmutter 20 abgeschlossen.

Die Materialwahl für die einzelnen Bauteile beider Ausführungsformen 10, 10A der erfindungsgemässen Sanitärarmatur hängt im Wesentlichen davon ab, ob die Bauteile mit der ersten bzw. zweiten Flüssigkeit 78, 80 und dem daraus erzeugten Flüssigkeitsgemisch 142 in direktem Kontakt stehen. Für mit Flüssigkeiten 78, 80, 142 in direktem Kontakt stehende Bauteile eignen sich Kunststoffe oder rostfreier Stahl.

Das Einstellelement 68 ist aus Kunststoff, beispielsweise aus Polyamid, vorzugsweise aus Polyoxymethylen (POM) gefertigt, wobei eine Metallausführung ebenfalls denkbar ist.

Das Armaturengehäuse 30 ist bevorzugt aus rostfreiem Stahl gefertigt. Der Einsatz von verchromtem Messing ist jedoch auch möglich.

Der Auslass 38 und die Sockelhülse 18, beziehungsweise deren Aufnahmeteil 218 und Winkelteil 220, sind aus Kunststoff oder rostfreiem Stahl, bevorzugt aus verchromten Acrylnitril-Butadien-Styrol (ABS) oder Polyoxymethylen (POM) gefertigt, während der Befestigungsteil 222 und der Anschlussteil 156 vorzugsweise aus Messing gefertigt, jedoch nicht verchromt sind.

Selbstverständlich ist es denkbar, dass anstelle der beschriebenen Zuleitungsfittings 90 konventionelle Leitungsverbindungen, beispielsweise Einschraubnippel eingesetzt werden.

Zudem ist es denkbar, dass die Form des Armaturengehäuses 30 anders gestaltet ist, solange die Funktion beibehalten wird und das Einstellelement von Aussen zugänglich bleibt.

Weiter ist es möglich, auf das Zwischenelement 188 zu verzichten, ohne dass die Funktion der erfindungsgemässen Sanitärarmatur wesentlich eingeschränkt wird.

Die geometrischen Formen des ersten und zweiten Einlass-Durchlasses 124, 126, sowie des ersten und zweiten Steuerdurchlasses 132, 134 sind von der Funktion her von untergeordneter Bedeutung. Wesentlich ist hingegen, dass der erste und der zweite Strömungsquerschnitt 138, 140 möglichst hindernisfrei, das heisst beispielsweise auch gratfrei sind, um eine unerwünschte Entgasung des karbonisierten Wassers zu verhindern.

Es ist weiter denkbar, dass die zweite Steuerscheibe 114 anstelle zweier Steuerdurchlässe 132, 134 lediglich einen einzigen Steuerdurchlass aufweist, wenn der erste und der zweite Einlass-Durchlass 124, 126 der ersten Steuerscheibe formmässig entsprechend aneinander angepasst sind.

Wenn zusätzlich verhindert werden soll, dass beispielsweise Fremdwasser zwischen dem Armaturengehäuse 30 und dem Einstellelement 68 in die Sanitärarmatur 10, 10A eintreten kann, ist es möglich, eine in Fig. 4 nicht gezeigte, weitere O-Ring-Dichtung in die erste Ringnut 186 einzusetzen.

Es ist auch denkbar, dass der Bedienabschnitt 170 des Einstellelementes 68 keine ebenen Flächen, sondern beispielsweise eine Rändelung aufweist oder als Vieleck, zum Beispiel zwölfeckig gestaltet ist oder radial mit einem Hebel versehen wird. Zur weiteren Verbesserung der Bediensicherheit des Bedienabschnitts 170 kann mit einer gummiartigen Beschichtung, beispielsweise aus Kautschuk, erreicht werden, dass ein Abrutschen der Hand des Benutzers vom Einstellelement 68 verhindert wird.

In einer bevorzugten Ausführungsform werden sowohl die erste, als auch die zweite Flüssigkeit 78, 80 den jeweiligen Speiseleitungsanschlüssen 74, 76 gekühlt zugeführt.

Der erfindungsgemässen Sanitärarmatur können in einer weiteren Verwendungsform auch zwei kohlensäurehaltige Flüssigkeiten 78, 80 unterschiedlicher Qualität, beispielsweise Mineralwasser oder mit Sauerstoff angereichertes oder aromatisiertes Wasser und aromatisiertes Wasser, zugeführt werden.

In einer weiteren Verwendungsform können der erfindungsgemässen Sanitärarmatur auch zwei im Wesentlichen kohlensäurefreie Flüssigkeiten 78, 80 unterschiedlicher Qualität, beispielsweise aufbereitetes, filtriertes Leitungswasser und aromatisiertes Wasser zugeführt werden.

## Patentansprüche

1. Sanitärarmatur mit einem Auslass (38) und einem hydraulisch damit verbundenen, an eine erste Flüssigkeitsquelle anschliessbaren ersten Speiseleitungsanschluss (74), einer hydraulisch zwischen dem ersten Speiseleitungsanschluss (74) und dem Auslass (38) angeordneten Pilotventilanordnung (48), und einem an eine zweite Flüssigkeitsquelle anschliessbaren zweiten Speiseleitungsanschluss (76), **dadurch gekennzeichnet, dass** eine Steuervorrichtung (50) eingangsseitig hydraulisch mit dem ersten und dem zweiten Speiseleitungsanschluss (74, 76) und ausgangsseitig hydraulisch mit der Pilotventilanordnung (48) verbunden ist und die Pilotventilanordnung (48) über die Steuervorrichtung (50) dauernd mit wenigstens dem ersten Speiseleitungsanschluss (74) oder dem zweiten Speiseleitungsanschluss (76) hydraulisch verbunden ist.

2. Sanitärarmatur gemäss Anspruch 1, **dadurch gekennzeichnet, dass** die Steuervorrichtung (50) und die Pilotventilanordnung (48) in einem Armaturengehäuse (30) der Sanitärarmatur untergebracht sind, in der Steuervorrichtung (50) eingangsseitig eine gehäusefeste erste keramische Steuerscheibe (110) mit einem ersten Einlass-Durchlass (124) und einem zweiten Einlass-Durchlass (126) und ausgangsseitig eine an der ersten Steuerscheibe (110) anliegende zweite keramische Steuerscheibe (114) mit mindestens einem Steuerdurchlass (132, 134) gelagert sind, wobei die zweite Steuerscheibe (114) mittels eines Einstellelementes (68) von ausserhalb des Gehäuses (28) relativ zur ersten Steuerscheibe (110) bewegbar ist und der erste Einlass-Durchlass (124) dem ersten Speiseleitungsanschluss (74) und der zweite Einlass-Durchlass (126) dem zweiten Speiseleitungsanschluss (76) zugeordnet ist.

3. Sanitärarmatur gemäss Anspruch 2, **dadurch gekennzeichnet, dass** die zweite Steuerscheibe (114) zwischen einer ersten Endlage (120) und einer zweiten Endlage (122) drehbar um eine Achse (34) der Steuervorrichtung (50) angeordnet ist.

4. Sanitärarmatur gemäss Anspruch 3, **dadurch gekennzeichnet, dass** das Einstellelement (68) zur Bildung der ersten Endlage (120) und der zweiten Endlage (122) mindestens ein Anschlagelement (166) aufweist.

5. Sanitärarmatur gemäss Anspruch 4, **dadurch gekennzeichnet, dass** das hülsenförmige Einstellelement (68) zwei im Wesentlichen kreisringsegmentförmige Anschlagelemente (166) aufweist, welche bezüglich der Achse (34) einander im Wesentlichen radial gegenüberliegend angeordnet sind und zum Zusammenwirken mit der zweiten Steuerscheibe (114) in die Steuervorrichtung (50) hineingreifen.

6. Sanitärarmatur gemäss einem der Ansprüche 1 bis 5, **dadurch gekennzeichnet, dass** die Pilotventilanordnung (48) über die Steuervorrichtung (50) dauernd mit dem ersten Speiseleitungsanschluss (74) und dem zweiten Speiseleitungsanschluss (76) hydraulisch verbunden ist, die zweite Steuerscheibe (114) einen ersten Steuerdurchlass (132) und einen zweiten Steuerdurchlass (134) aufweist, in der ersten Endlage (120) ein vom ersten Einlass-Durchlass (124) und vom ersten Steuerdurchlass (132) gebildeter erster Strömungsquerschnitt (138) maximal ist, während ein vom zweiten Einlass-Durchlass (126) und vom zweiten Steuerdurchlass (134) gebildeter zweiter Strömungsquerschnitt (140) minimal ist, und in der zweiten Endlage (122) der zweite Strömungsquerschnitt (140) maximal ist, während der erste Strömungsquerschnitt (138) minimal ist.

7. Sanitärarmatur gemäss einem der Ansprüche 1 bis 6, **dadurch gekennzeichnet, dass** die Pilotventilanordnung (48) als eine Hubventilanordnung ausgebildet ist, welche einen eine Hubbewegung ausführenden Ventilschliess-körper aufweist, die Hubbewegung durch eine Druckbetätigung eines mit dem Ventilschliesskörper verbundenen und in Richtung der Hubbewegung wirkenden Betätigungselementes (40) auslösbar ist und dass hydraulisch wirkende, flüssigkeitsfüllbare Räume zur Reduzierung einer für die Druckbetätigung notwendigen Kraft vorhanden sind.

8. Sanitärarmatur gemäss einem der Ansprüche 1 bis 7, **dadurch gekennzeichnet, dass** eine Kompensatoranordnung (52) zur veränderbaren Festeinstellung einer Strömungsquerschnittsgrösse hydraulisch zwischen der Steuervorrichtung (50) und der Pilotventilanordnung (48) angeordnet ist.

9. Sanitärarmatur gemäss Anspruch 8, **dadurch gekennzeichnet, dass** die Strömungsquerschnittsgrösse durch einen mit der Kompensatoranordnung (52), vorzugsweise einem Regulierkörper (58), zusammenwirkenden, am Gehäuse (28) abgestützten Exzenter (56), vorzugsweise einer Exzenterschraube (56), einstellbar ist.

10. Verwendung einer Sanitärarmatur gemäss einem der Ansprüche 1 bis 9 zur Steuerung eines Kohlesäuregehaltes eines über den Auslass (38) auszugebenden Flüssigkeitsgemisches (142) aus einer kohlesäurehaltigen ersten Flüssigkeit (78) und einer stillen zweiten Flüssigkeit (80.
